# EUROPEAN PATENT APPLICATION

(11) **EP 4 686 245 A1**
(43) Date of publication of application: **28.01.2026**
(21) Application number: 24190078.6
(22) Date of filing: 22.07.2024
(51) Int. Cl.: H04W 12/084, H04W 12/108, H04W 12/60, H04W 12/03, H04W 4/40, H04L 9/40

(54) **ENABLING ACCESS TO A RESOURCE SERVER DURING EXECUTION OF A SOFTWARE APPLICATION IN A VEHICULAR COMPUTER SYSTEM**

(71) Applicant: Volvo Truck Corporation, 405 08 Göteborg (SE)
(72) Inventor: WIKENSTEDT, Ivar, 431 41 MÖLNDAL (SE); KALKOV, Mikhail, 431 46 MÖLNDAL (SE); EZHIL, Vikram, 641045 COIMBATORE (IN); VINAYAK, Shubhendu, 211001 PRAYAGRAJ (IN)
(74) Representative: Kransell & Wennborg KB

(57) **Abstract**

A computer system (100) comprising: a local authorization server (110) managed by an external provider (189); processing circuitry (120) configured to execute software code (191) realizing a software application extracted from an application package (190), which has a digital signature (193) of the external provider and further contains metadata (192) associated with the software application; a protected memory (130) for a cryptographic key (131); and an authorization client (141), trusted by the external provider and with exclusive access to the cryptographic key. The authorization client verifies the application package's authenticity using the digital signature; reads, from the metadata, a set of access permissions to be used by the software application vis-à-vis a resource server (181) having a trust relationship with the external provider; submits, using the cryptographic key, a request (RQ) for access tokens (TKN) corresponding to the set of access permissions; and makes the access tokens available to the processing circuitry.

## Description

### TECHNICAL FIELD

The disclosure relates generally to access control in computer systems. In particular aspects, the disclosure relates to technologies for enabling access to a resource server during execution of a software application in a vehicular computer system or another computer system which is, from time to time, offline. The disclosure can be applied to heavy-duty vehicles, such as trucks, buses, and construction equipment, among other vehicle types. Although the disclosure may contain teachings exemplified with respect to a particular vehicle, the disclosure is not restricted to any particular vehicle.

### BACKGROUND

Many software applications access external data while they execute. The access operation may include a read or write call to a resource server over a communication network. As a rule, resource servers intended to be connected to the Internet or other open communication networks are equipped with technical means for controlling access to the data that they store. Such technical means may include structures or functionalities which protect the stored data and which can be selectively opened on request, after it has been established that the requester is authorized and/or the request is issued in circumstances where access should be allowed (e.g., according to an access policy). For this purpose, the technical means in the resource server may further include - or cooperate with - an authentication functionality, which identifies the requester, and some type of decision-making functionality.

The technical means for access control may be owned and managed by the resource server owner. Alternatively, the resource server owner may delegate access control to another entity, and the delegation may be implemented in an authorization server. If it is established that a request for access is to be granted, the authorization server gives the requester an access token which the resource server will accept. There exist several standards for delegating access, including the open standard Open Authorization (OAuth) 2.0, as specified in RFC 6749, "The OAuth 2.0 Authorization Framework", Internet Engineering Task Force (IETF), Oct. 2012. OAuth 2.0 specifies, among other aspects, the capabilities of standard-compliant authorization endpoints and standard-compliant token endpoints, and it defines a protocol for the communication between the mentioned endpoints, the resource server, the resource owner and the requester (client) for processing an access request.

Many of the existing access delegation standards, including OAuth 2.0, have been conceived with an assumption of uninterrupted connectivity. For example, quasi-instant approval from the resource owner may be required before a requested access token can be issued, or else the remainder of the authorization flow will be delayed. Since the assumption of uninterrupted connectivity is not always valid in vehicular contexts, it is an object of the present disclosure to propose an implementation of access delegation which can be executed offline while connectivity is weak or unavailable.

### SUMMARY

According to a first aspect of the disclosure, there is provided a computer system comprising: a local authorization server managed by an external provider, processing circuitry configured to execute software code realizing a software application, a protected memory for storing a cryptographic key, and an authorization client, which is trusted by the external provider and has exclusive access to the cryptographic key. The software code becomes available by being extracted from an application package, which has a digital signature of the external provider and further contains metadata associated with the software application. Further, the authorization client is configured to verify the application package's authenticity using the digital signature; to read, from the metadata, a set of access permissions to be used by the software application at runtime vis-à-vis a resource server having a trust relationship with the external provider; to submit, using the cryptographic key, a request for the local authorization server to generate access tokens corresponding to the set of access permissions; and to make the access tokens available to the processing circuitry.

In the computer system according to the first aspect, the external provider manages the local authorization server and trusts the authorization client. The external provider is in a trust relationship with the resource server, e.g., as a result of access delegation. Further, the authorization client verifies the application package's authenticity using a digital signature of the external provider. The local authorization server will therefore trust that the authorization client requests access tokens for the correct set of access permissions, namely, the access permissions which are indicated in the metadata of the application package at the time it was signed by the external provider. Since there is now no need to inquire with the external provider - like in some state-of-the-art access control solutions - the authorization client can obtain the access tokens without being connected to the external provider, including when the authorization client is in an offline state. This is an improvement over such access control solutions where the local authorization server received a blank request to generate access tokens, which compelled the local authorization server to ask a trusted back-office system to indicate the requester's set of access permissions, before the authorization server could proceed to generating the corresponding tokens. A technical benefit may include a reduced dependency on connectivity. If the computer system is installed in a vehicle, e.g. as an infotainment system which requests media content from a remote media server, this may in turn allow more unrestrained movement of the vehicle. In particular, it is no longer necessary to avoid movement into areas where cellular or non-cellular radio coverage is weak.

In other words, the present disclosure establishes a chain of trust which relies on the application package signature and the cryptographically protected submission of the access token request. This replaces such state-of-the-art chains of trust which depend on having a working data connection to the external provider at all relevant times. It is noted that the resource server may be either a local server, one which can exchange data with the computer system without connectivity, or a remote server. For example, the resource server may include middleware configured to handle a queue of requests to a remote resource server until there is connectivity and to deliver responses to the requesting application later on. This setup simplifies the authorization of such asynchronously processed requests.

Optionally in some examples, including in at least one preferred example, the request is submitted using a data link, which is protected by the cryptographic key and which extends between the authorization client and the local authorization server. A technical benefit may include that the local authorization server can trust that the request for access tokens has not been altered on its way from the authorization client. In one scenario, an unauthorized third party extends the request with further access permissions, and the third party gains access to the resulting tokens by intercepting the response or by attacking a memory in the computer system where the access tokens are stored; this scenario becomes much less likely if the request is sent over a cryptographically protected data link. The protected data link may be compliant with Transport Layer Security (TLS) or mutual Transport Layer Security (mTLS) or unilateral Transport Layer Security (uTLS).

Optionally in some examples, including in at least one preferred example, the cryptographic key is a private key of an asymmetric key pair. A technical benefit may include that the public key of the pair can be shared with the local authorization server - the recipient - using a potentially unsafe communication channel.

Optionally in some examples, including in at least one preferred example, the authorization client is configured to read the set of access permissions from metadata contained in a manifest file in the application package. Technical benefits may include that the manifest file is easy to separate from the software code in the application package, and there exist a number of interoperable data formats which include a manifest file.

Optionally in some examples, including in at least one preferred example, the local authorization server is arranged in an application programming interface (API) endpoint managed by the external provider. An API endpoint is a convenient virtual structure for use as a remotely managed entity in a computer system.

Optionally in some examples, including in at least one preferred example, the access tokens corresponding to the set of access permissions are stored locally in the computer system, for use during multiple executions of the software code. A technical benefit is the avoidance of repeated requests relating to the same set of access permissions. Optionally, the access tokens have a finite validity period, which is observed by the computer system.

According to a second aspect of the disclosure, there is provided a method of executing a software application in a computer system of the type which comprises processing circuitry, a local authorization server managed by an external provider and an authorization client trusted by the external provider. According to this method, the computer system receives an application package which contains executable software code realizing the software application and associated metadata, and which has a digital signature of the external provider. The computer system then causes the authorization client to perform the following steps:
- verifying the application package's authenticity using the digital signature,
- reading, from the metadata, a set of access permissions to be used by the software application at runtime vis-à-vis a resource server having a trust relationship with the external provider,
- submitting a request for the local authorization server to generate access tokens corresponding to the set of access permissions, and
- making the access tokens available to the processing circuitry.
After this, the software code is executing using the processing circuitry, while accessing data in the resource server by means of the access tokens. Similar to the first aspect of the present disclosure, important parts of the method outlined above can be executed offline. In particular, the step of submitting a request to generate access tokens can be performed in the absence of a functioning connection from the computer system to the global Internet. If the resource server is a local server, the method of the second aspect can be executed offline in its entirety. If the resource server is a remote server, the method can be executed up to and including the obtention and making available of the access tokens. In this sense, the method is suitable for computer systems which lack uninterrupted connectivity, as is oftentimes the case in vehicular applications.

Optionally in some examples, including in at least one preferred example, this method can be implemented as part of a method of installing a new software application in a computer system of the type which comprises processing circuitry, a local authorization server managed by an external provider and an authorization client trusted by the external provider. The software installation method comprises, in addition to the steps already described:
- receiving the application package;
- verifying the application package's authenticity and storing the executable software code realizing the software application in a memory of the computer system; and
- after obtaining the generated access tokens from the local authorization server, storing the access tokens in the memory.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer readable media, and computer program products associated with the above discussed technical benefits.

### BRIEF DESCRIPTION OF THE DRAWINGS

Examples are described in more detail below with reference to the appended drawings.
FIG. 1 is a block diagram of a computer system according to an example embodiment in communication with a resource server.
FIG. 2 is a flowchart of a method for executing a software application in a computer system which accesses a resource server during said execution.
FIG. 3 depicts example heavy-duty vehicles, for which the computer systems disclosed herein are suitable.
FIG. 4 is a schematic depiction of the computer system and resource server, including messages and signals exchanged while a software application attempts to access data stored in the resource server.
FIG. 5 is a sequence diagram illustrating an implementation that uses commercially available package manager software.
FIG. 6 illustrates example inner workings of the computer system of FIG. 1.

### DETAILED DESCRIPTION

The detailed description set forth below provides information and examples of the disclosed technology with sufficient detail to enable those skilled in the art to practice the disclosure.

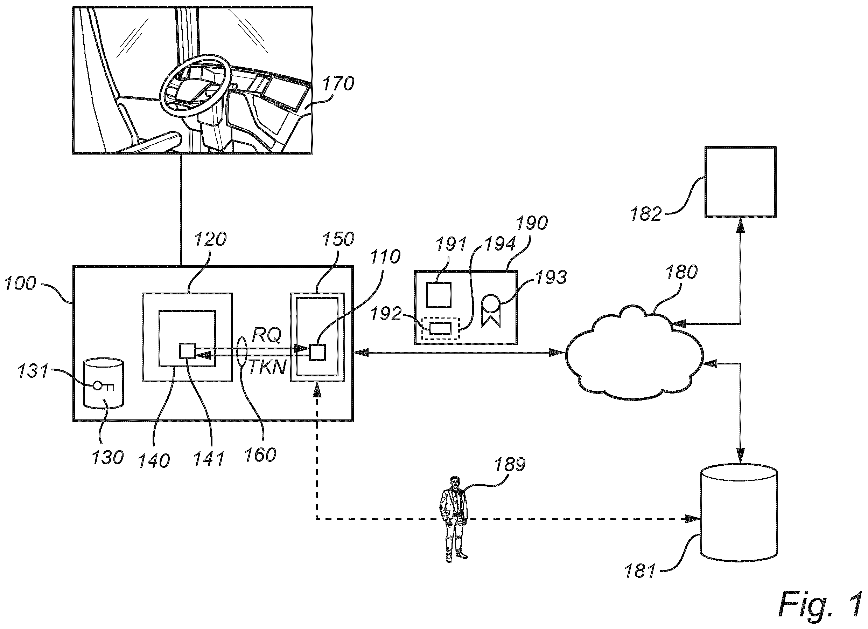

FIG. 1 is a block diagram of a computer system 100 according to an example embodiment. FIG. 1 further shows external communication parties 181, 182, with which the computer system 100 is able to exchange data and signals over a communication network 180. The communication network 180 may be an open digital communication network or public digital communication network, such as the global Internet. The external communication parties include a resource server 181 which is owned and/or managed by a resource provider. In FIG. 1, the resource server 181 has been drawn as a remote server, although the present disclosure covers also implementations where the resource server 181 is local, e.g., middleware that handles asynchronous requests to a remote resource server.

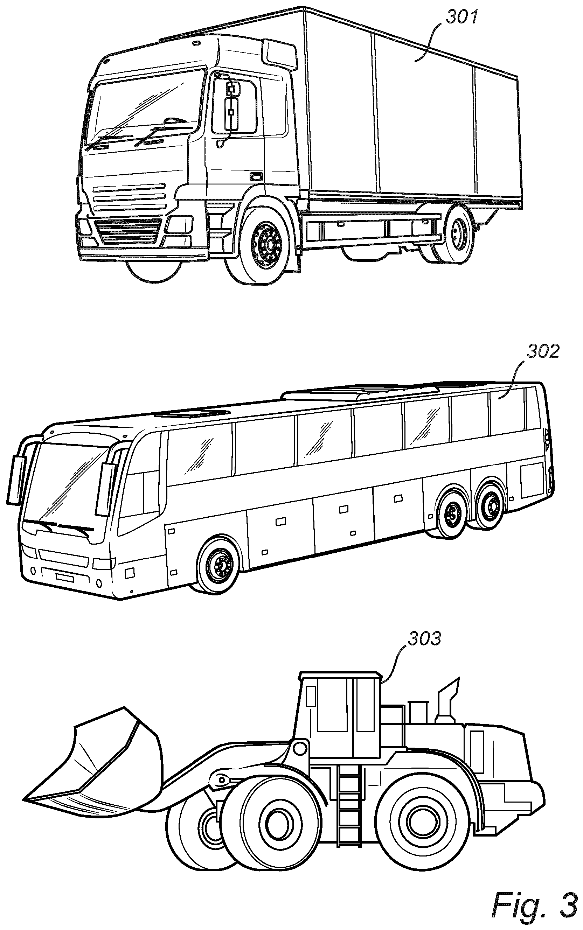

The components of the computer system 100 are substantially co-located. For example, in the case of a vehicular computer system 100 (e.g., an infotainment system, a service entertainment module, a navigation system, a telematics unit), all components of the computer system 100 may be installed in the same vehicle. The vehicle may be a heavy-duty vehicle or a medium-duty vehicle, possibly a car/automobile too. Example heavy-duty vehicles, notably heavy-duty commercial vehicles, are shown in FIG. 3, namely, a truck 301, a bus/coach 302 and a piece of heavy equipment 303. The vehicle in which the computer system 100 is installed may be a conventional manually driven/operated vehicle, or a fully or partly autonomous vehicle.

The components of the computer system 100 include one or more components which are managed by the system owner and one or more components which are managed by an external provider 189, or trusted by an external provider 189.

**In** the terminology of the present disclosure, *managing* a component may include having authority to perform one or more of the following operations: start, stop, and restart operating system (OS) services; reboot the component when it crashes; view and stop OS processes; view and clear an event log; run custom scripts; view performance statistics; install and uninstall one or more software applications; copy, move and delete files; add and delete network shares; perform substantive decision-making on the component's behalf. These enumerated example operations may be performed remotely over the network 180, without a need to be physically present at the computer system 100. In some implementations, the external provider 189 may be exclusively authorized to perform these operations on the relevant component.

As used herein, *owning* a component may imply a right to manage the component or to delegate the management to a third party in accordance with the component owner's instructions.

As used herein, furthermore, the fact that a component is *trusted* by an entity may imply that the entity treats all data and signals from the component as being equally truthful as data and signals established or generated by the entity itself; there is normally no need for the entity to cross-check the data and signals based on, say, reference information or by performing a consistency check on the data and signals. This applies primarily to data and signals which the entity receives directly from the component or via a data link which the entity trusts is safe. The fact that the component is trusted may further imply that the entity assumes that the component acts in good faith, without fraudulent intent. In normal circumstances, a component which is owned or managed by an entity is also trusted by that entity. Earning a status of trustedness from the viewpoint of an entity may require, on a technical level, that the entity has reasonable certainty that the component is robust to intrusion attempts and credentials for accessing the component are stored and transferred safely.

Accordingly, in the computer system 100 shown in FIG. 1, the components which are managed by the system owner include:
- processing circuitry 120 for executing software code,
- a protected memory 130 suitable for storing a cryptographic key 131, and
- a user interface 170, exemplified as an infotainment interface in a driver cab of a heavy vehicle.
The computer system's 100 components which are managed by, or at least trusted by, the external provider 189 include:
- a local authorization server 110, which is managed by the external provider 189, and
- an authorization client 141, which is trusted by the external provider 189.
In other words, the local authorization server 110 and the authorization client 141 are not managed by the system owner of the computer system 100. Instead, all of them are managed or trusted by, as the case may be, the same entity which is herein referred to as the external provider 189, such that the local authorization server 110 and the authorization client 141 can cooperate in an unbroken chain of trust.

Further, the external provider 189 is in a trust relationship with the resource server 181. This may more precisely be a mutual trust relationship by which external provider 189 is trusted by the resource server 181 and vice versa. In some implementations, the external provider 189 is different from the resource provider - as may be the case if the resource provider has delegated the access management for the resource server 181 to the external provider 189 - while in some other implementations, the external provider 189 and the resource provider are the same entity.

The local authorization server 110 may for example be arranged in an application programming interface (API) endpoint 150. The API endpoint 150 may act as a communication gateway of the computer system 100, i.e., it allows data to flow between the communication network 180 and internal communication paths (e.g., data bus(es), a moving local ethernet network) within the computer system 100. Consistent with IETF RFC 6749, the local authorization server 110 shall be capable of issuing access tokens to authorization client 141 after the local authorization server 110 has successfully authenticated the external provider 189 and obtained authorization. As will be explained below, the authentication of the external provider 189 and obtaining of authorization will be considered successful if the authorization client 141 informs the local authorization server 110 that it has verified the authenticity of an application package 190 and, thus, the set of access permissions therein.

The authorization client 141 may be a software process executing in a separate environment 140 within the processing circuitry 120. In the interest of data privacy and/or integrity, this separate environment 140 may be associated with mechanisms which protect it from other processes that execute in the processing circuitry 120, as deemed necessary to maintain the trust relationship with the external provider 189. Alternatively, the authorization client 141 may be (trusted) software which executes on dedicated processing circuitry (not shown) that is managed by the external provider 189, which implies that it is trusted by the external provider 189. Either way, the authorization client 141 is realized by processing circuitry.

In FIG. 1 the dashed arrow from the external provider 189 to the API endpoint 150 indicates a management relationship. The dashed arrow from the external provider 189 to the resource server 181 indicates a trust relationship.

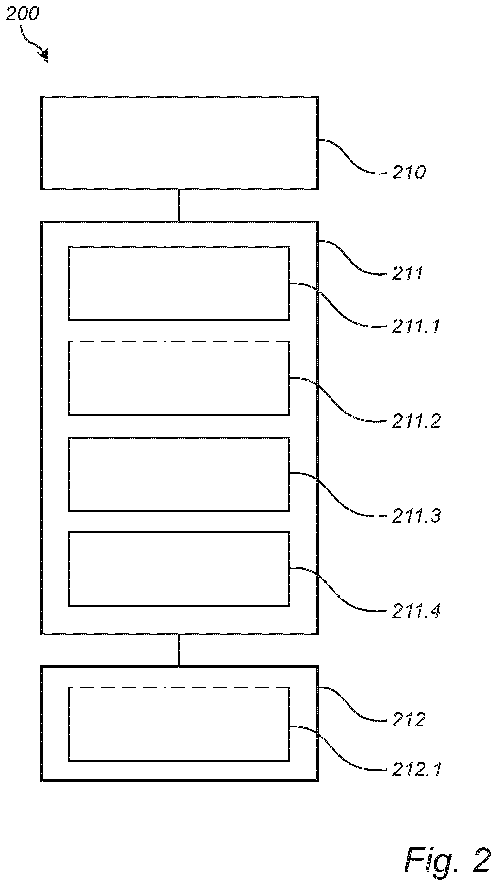

With additional reference to the flowchart in FIG. 2, there will now be described a sequence of operations that take place in the computer system 100 in order to enable the execution of a software application which requires access to a resource server 181 with access control. The operations are collectively referred to as an execution method 200. As described above, the method 200 can constitute a part of a method of installing a new software application in the computer system 100.

It is understood that the software application is realized by software code 191 which is extracted from an application package 190 during the execution of the method 200 or has been extracted from an application package 190 in advance. Extracting the software code 191 may simply mean reading the relevant portions of the application package 190 and/or copying those portions into a storage, such as a runtime memory. The application package 190 may have the form of an archive file, i.e., a data structure which is recognized as a single file by a file system or a communication interface, and which contains multiple files and metadata. In the application package 190, there is metadata 192 associated with the software application. The metadata 192 indicates a set of access permissions to be used (exercised, relied upon) by the software application at runtime vis-à-vis the resource server 181. The metadata 192 may for example be contained in a manifest file 194 of the application package 190. The manifest file 194 may for example be a markup language file, such as an XML file. In particular, the application package 190 with the manifest file 194 may have the format of an Android app package. The permissions may be expressed as custom Android-type permissions in the corresponding Android app manifest 194.

It is further understood that the application package 190 is received, retrieved or otherwise obtained by the computer system 100 after the application package 190 has been signed by the external provider 189. Evidence of the signing may be that the application package 190 has (e.g., is associated with or includes) a digital signature 193 attributable to the external provider 189. For example, the digital signature 193 may have been generated by the external provider 189 itself, or the digital signature 193 may be traceable via a chain of trust back to the external provider 189, or the digital signature 193 may be trusted by (e.g., whitelisted by) the external provider 189. For simplicity of this disclosure, these and further cases will be covered by the expression "a digital signature 193 of the external provider 189".

The method 200 visualized in FIG. 2 can be implemented in the computer system 100. More precisely, some steps of the method 200 to be described may be executed by those components of the computer system 100 which are managed by the system owner, and certain further steps thereof may be executed by means of requests for the authorization client 141 to perform these.

In a first step 210 of the method 200, an application package 190 is received in the computer system. As mentioned above, the application package 190 is assumed to contain, at least, executable software code 191 realizing the software application and associated metadata 192, and is further assumed to carry a digital signature 193 of the external provider 189.

In a second step 211, the authorization client 141 is caused to perform a number of substeps. For example, the processing circuitry 120 may issue a request to the authorization client 141 to do so.

In a first substep 211.1, the authorization client 141 verifies the application package's 190 authenticity using the digital signature 193. The verification may include, in a per se known manner, that the authorization client 141 computes a checksum (hash) of a binary representation of the application package 190, and assesses whether the computed checksum is consistent with the digital signature 193.

A second substep 211.2 of step 211 is executed only if the first substep 211.1 has had a positive outcome, i.e., the application package 190 is deemed to be authentic. In the second substep 211.2, the authorization client 141 reads, from the metadata 192 (which may be contained in a manifest file 194 in the application package 190), a set of access permissions to be used by the software application at runtime vis-à-vis the resource server 181. In other words, the processing circuitry 120 can access all that data in the resource server 181 which the software application needs in order to execute successfully if it has the access permissions in said set. The access permissions may specify, on the one hand, the data concerned and, on the other hand, the operation to be performed on the data, such as read or write. The access tokens to be described below are to be presented to the resource server 181, to satisfy the resource server 181 that the software application indeed possesses this set of access permissions.

In a third substep 211.3, the authorization client 141 submits a request RQ for the local authorization server to generate access tokens corresponding to the set of access permissions. In response, the authorization client 141 receives a message with the access tokens TKN. In an OAuth 2.0 implementation, the access token request RQ and the response message TKN may be compliant with clause 4 of IETF RFC 6749. Further, the access tokens may be generated in the form foreseen in clause 1.4 of IETF RFC 6749 and/or issued according to the protocol of clause 5. An access token may include a cryptographic element that enables the resource server 181 to verify its authenticity. Additional reference is made to RFC 6750, "The OAuth 2.0 Authorization Framework: Bearer Token Usage", IETF, Oct. 2012. A further option is to generate the access tokens in the form of JSON Web Tokens (JWTs), e.g., as defined in RFC 7519, "JSON Web Token (JWT)", IETF, May 2015.

Preferably, the request RQ to generate access tokens is submitted to the local authorization server using a cryptographic key 131 stored in the memory 130, it being understood that the authorization client 141 has exclusive access to the cryptographic key 131. For this purpose, the memory 130 may be implemented such that it includes access control mechanisms that stop other components - including the components within the computer system 100 - from accessing the cryptographic key 131. The request RQ may for example be submitted using a data link 160 that is protected by the cryptographic key 131 and which extends between the authorization client 141 and the local authorization server 110. The protected data link 160 may be compliant with Transport Layer Security (TLS), or mutual TLS (mTLS), or unilateral TLS (uTLS). A TLS specification is found in RFC 8446, "The Transport Layer Security (TLS) Protocol Version 1.3", IETF, Aug. 2018.

Alternatively, the authorization client 141 may transfer the request RQ over a non-protected data link (not shown), though after having signed the request RQ using the cryptographic key 131, so that the local authorization server 110 can confirm that the request RQ has not been altered. This is another way in which the authorization client 141 can submit the request RQ using the cryptographic key 131. For this purpose, the cryptographic key 131 held by the computer system 100 may a private key belonging to an asymmetric key pair, such as the private key specified in the Rivest-Shamir-Adleman (RSA) cryptosystem. If the local authorization server 110 holds the public key of the same key pair, it is able to confirm that the request RQ has not been altered on its way from the authorization client 141.

Further alternatively, the authorization client 141 may have exclusive access to a MACsec-protected Ethernet virtual LAN (VLAN) with the local authorization server 110, which in turn relies on symmetric keys stored in AUTOSAR Secure Hardware Extension (SHE) cryptomodules. Another way is letting the authorization client 141 use the AUTOSAR Security On-board Communication protocol (SecOC) to secure CAN messages to the local authorization server 110; it may rely on AUTOSAR SHE cryptomodules to store symmetric keys.

The cryptographic key 131 may further act as a reliable identifier of the authorization client 141. In some implementations, a step of authenticating the requester and establishing that is authorized to receive access tokens may be mandatory in the processing of the access token request RQ.

In a fourth substep 211.4, the authorization client 141 makes the access tokens available to the processing circuitry 120 and optionally to further components of the computer system 100. This substep 211.4 may include storing the access tokens locally in the computer system 100, such as in memory 130, where they can be used during multiple executions of the software code 191.

In a third step 212 of the method 200, then, the software code 191 can be executed on the processing circuitry 120, including accessing (substep 212.1) data in the resource server using the access tokens obtained in the second step 211. More precisely, processing circuitry's 120 access calls to the resource server 181 during the execution, including the presentation of the access tokens to the resource server 181, may be as specified in clause 7 of IETF RFC 6749.

In some embodiments of the method 200, a finite validity period of the access tokens is observed. In other words, if the access tokens have been stored locally in the computer system 100 for use during multiple executions of the software code 191, the authorization client is requested - at or near the expiry of the finite validity period of the access tokens - to submit a further request RQ for the local authorization server 141 to generate access tokens corresponding to the set of access permissions. In particular, the submission of the further request may include presenting a refresh token to the local authorization server 141, as foreseen in clause 6 of IETF RFC 6749. The availability of the refresh token makes it possible to use the same authorization grant a further time, which simplifies the processing.

Still other embodiments of the method 200 may allow the access permission of the software application to be changed at runtime. One way to achieve this is to let the manifest 194 define a maximal set of access permissions, from which all are not used at all times. Different software blocks are then controlled using Runtime Resource Overlay (RRO), which is a package in Android that allows the resource values of a target package to be changed at runtime. This way, the code and the access rights are present in the computer system 100, but they are not used until they are activated through the RRO. The activation may correspond to installing the software application or upgrading a service. Current implementations of RRO require connectivity, but once the software application has been installed it will work offline as well. A benefit of the embodiments with RRO is that access permissions are handled in a way that is more similar to the default access management in Android, and this could simplify interoperability.

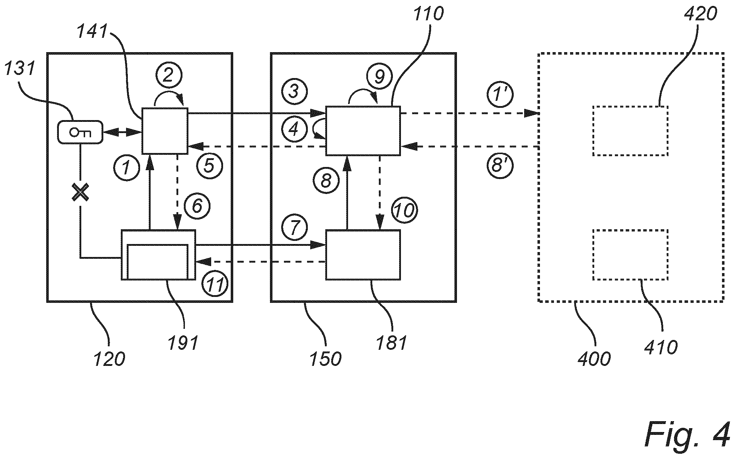

FIG. 4 is a schematic depiction of the processing circuitry 120 and API endpoint 150 in the computer system 100, as well as processes and virtual objects established therein. The symbols indicate that the authorization client 141 has exclusive access to the cryptographic key 131. FIG. 4 further shows the resource server 181, as well as an external back-office system 400, in which an authorization server 410 and a remote management system 420 are configured. The back-office system 400 is owned or managed by the external provider 189. In general terms, the remote management system 420 therein is configured to remotely manage the local authorization server 110. It is understood that the back-office system 400 can be contacted only when the computer system has a functioning connection to the global Internet or an equivalent communication network.

The encircled reference numbers identify the messages and signals exchanged between the components, as well as internal operations in these components, while the executing software application 191 attempts to access data stored in the resource server 181. In FIG. 4, the software application 191 is shown embedded in a larger rectangle symbolizing an access library. The access library may be a software library configured to simplify the software application's 191 interaction with the local authorization client 141. It may be regarded as a detached part of the local authorization client 110 that is bundled with every software application; this may improve the interoperability with externally developed software applications. Dashed arrows correspond to optional messages and signals. The meaning of the reference numbers is explained in Table 1.

| **Table 1: Messages, signals and operations in** **FIG. 4** | |
|---|---|
| 1 | Request access token |
| 2 | Extract permissions from manifest 194 |
| 3 | Send, to the API endpoint 150, an access token request RQ with a scope according to the extracted permissions |
| 4 | Validate the access token request RQ and generate access tokens |
| 5 | Response message TKN with the access tokens |
| 6 | Forward access tokens |
| 7 | Request, including the access tokens for external data, preferably using an encrypted data link such as a uTLS data link |
| 8 | Forward access token and permission |
| 9 | Check validity of access token and permissions |
| 10 | Response message indicating that validity is OK or not OK |
| 11 | HTTP 200 response (OK) or HTTP 401 response (Unauthorized) |

The sequence of messages and signals according to Table 1 may correspond closely to the steps of method 200 which were described above with reference to FIG. 2. Likewise, the technical effects and advantages may be similar to those achieved by the method 200.

Evidently, the back-office system 400 is not required for executing the above operations but may nevertheless be part of implementations in order to cater to specific use cases. For example the back-office system 400 may issue authentication tokens in response to a request (message 1') from the authorization server 110 in the computer system 100. This is to say, the authorization server 110 in the computer system 100 may have the option of delegating the decision concerning access-token issuance, as may be relevant, say, for particularly sensitive permissions. Within the back-office system 400, the request is received by the remote management system 420, which forwards it to the authorization server 410 for evaluation. In the case of a favorable outcome of the evaluation, the remote management system 420 receives the one or more access tokens and forwards them (message 8') to the requesting entity.

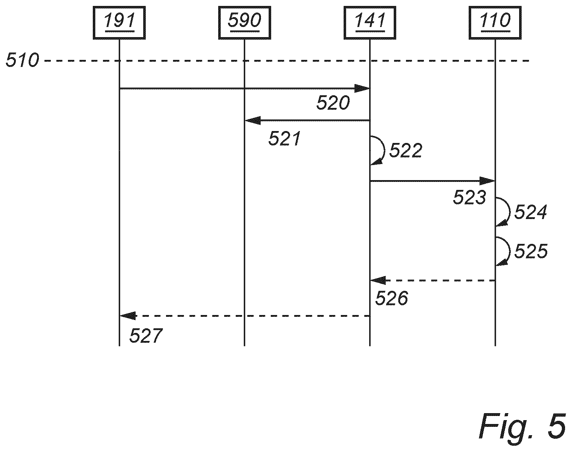

FIG. 5 is a sequence diagram illustrating an implementation that includes an instance of Android class PackageManager, which carries the reference number 590. At a point in time 510 after a boot sequence of the computer system 100 (and notably the boot sequence of an operating system of the processing circuitry 120) has been completed, the following messages and signals are exchanged among the executing software code 191, PackageManager 590, the authorization client 141 and the local authorization server 110. The messages and signals are transmitted in a time sequence that corresponds to the vertical direction in FIG. 5. The meaning of the reference numbers is indicated in Table 2.

| **Table 2: Messages, signals and operations in** **FIG. 5** | |
|---|---|
| 520 | Request to get access tokens |
| 521 | Request for PackageManager class to read manifest file 194 in application package 190 |
| 522 | Extract set of access permissions from the manifest file 194 |
| 523 | Access token request RQ to local authorization server 110, preferably transmitted using an mTLS data link |
| 524 | Validate the data link |
| 525 | Generate (and store) access tokens |
| 526 | Reply message TKN with access tokens, preferably transmitted using an mTLS data link |
| 527 | Return access tokens |

Again, the sequence of messages and signals shown in FIG. 5 may correspond closely to the steps of method 200, and their effects and advantages may be similar.

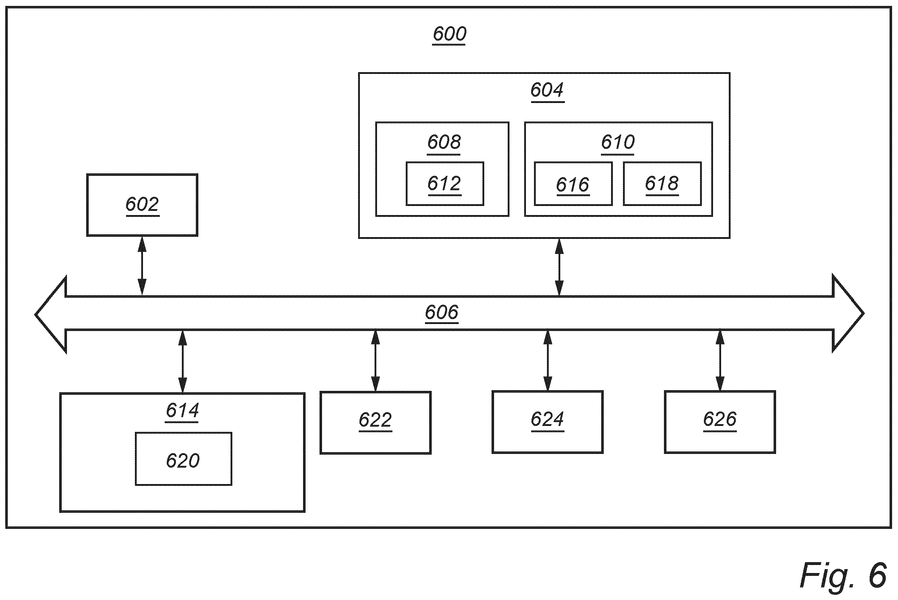

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising:
a local authorization server (110) managed by an external provider (189);
processing circuitry (120) configured to execute software code (191) realizing a software application, wherein the software code is extracted from an application package (190), which has a digital signature (193) of the external provider and further contains metadata (192) associated with the software application;
a protected memory (130) for storing a cryptographic key (131); and
an authorization client (141), which is trusted by the external provider and has exclusive access to the cryptographic key, and which is configured:
- to verify the application package's authenticity using the digital signature,
- to read, from the metadata, a set of access permissions to be used by the software application at runtime vis-à-vis a resource server (181) having a trust relationship with the external provider,
- to submit, using the cryptographic key, a request (RQ) for the local authorization server to generate access tokens (TKN) corresponding to the set of access permissions, and
- to make the access tokens available to the processing circuitry.

2. The computer system of claim 1, wherein the request is submitted using a data link (160), which is protected by the cryptographic key and which extends between the authorization client and the local authorization server.

3. The computer system of claim 2, wherein the data link is compliant with Transport Layer Security, TLS, or mutual Transport Layer Security, mTLS, or unilateral Transport Layer Security, uTLS.

4. The computer system of any of the preceding claims, wherein the cryptographic key is a private key of an asymmetric key pair.

5. The computer system of any of the preceding claims, wherein the authorization client is configured to read the set of access permissions from metadata contained in a manifest file (194) in the application package.

6. The computer system of any of the preceding claims, wherein the local authorization server is arranged in an application programming interface endpoint, API endpoint (150) managed by the external provider.

7. The computer system of any of the preceding claims, wherein the access tokens corresponding to the set of access permissions are stored locally in the computer system, for use during multiple executions of the software code.

8. The computer system of claim 7, wherein the processing circuitry is configured to observe a finite validity period of the access tokens.

9. The computer system of any of the preceding claims, which is a vehicular computer system, such as an infotainment system in a vehicle (301, 302, 303).

10. A vehicle (301, 302, 303) comprising the computer system (100) of any of claims 1 to 9.

11. A method (200) of executing a software application in a computer system (100), wherein the computer system comprises processing circuitry (120), a local authorization server (110) managed by an external provider (189) and an authorization client (141) trusted by the external provider, the method comprising:
receiving (210), in the computer system, an application package (190) which contains executable software code (191) realizing the software application and associated metadata (192), and which has a digital signature (193) of the external provider;
causing the authorization client to perform the following steps:
- verifying (211.1) the application package's authenticity using the digital signature,
- reading (211.2), from the metadata, a set of access permissions to be used by the software application at runtime vis-à-vis a resource server (181) having a trust relationship with the external provider,
- submitting (211.3) a request (RQ) for the local authorization server to generate access tokens (TKN) corresponding to the set of access permissions, and
- making (211.4) the access tokens available to the processing circuitry;
executing (212) the software code using the processing circuitry, while accessing (212.1) data in the resource server using the access tokens.

12. A computer program product comprising program code for performing, when executed by the processing circuitry (120), the method (200) of claim 11.

13. A non-transitory computer-readable storage medium comprising instructions, which when executed by the processing circuitry (120), cause the processing circuitry to perform the method (200) of claim 11.

14. The method of claim 11, wherein the step of submitting (211.3) a request to generate access tokens is performed in absence of a functioning connection (184) to the global Internet (180).

15. The method of claim 14, wherein the request is submitted (211.3) using a cryptographic key to which the authorization client has exclusive access.

16. The method of claim 15, wherein the request is submitted (211.3) using a data link (160) between the authorization client and the local authorization server, wherein the data link is protected by said cryptographic key.

17. The method of claim 15 or 16, wherein the cryptographic key is a private key of an asymmetric key pair.

18. The method of any of claims 11 and 14 to 17, wherein the set of access permissions to be used by the software application is read (211.2) from metadata contained in a manifest file (194) in the application package.

19. The method of any of claims 11 and 14 to 18, wherein making (211.4) the access tokens available to the processing circuitry includes storing the access tokens locally in the computer system.

20. The method of any of claims 11 and 14 to 19, further comprising, in connection with expiry of a finite validity period of the access tokens, causing the authorization client to submit (211.3) a further request (RQ) for the local authorization server to generate access tokens (TKN) corresponding to the set of access permissions.

## Amended claims

### Amended claims in accordance with Rule 137(2) EPC.

1. A computer system (100) comprising:
a local authorization server (110) managed by an external provider (189);
processing circuitry (120) configured to execute software code (191) realizing a software application, wherein the software code is extracted from an application package (190), which has a digital signature (193) of the external provider and further contains metadata (192) associated with the software application;
a protected memory (130) for storing a cryptographic key (131); and
an authorization client (141), which is trusted by the external provider and has exclusive access to the cryptographic key, and which is configured:
- to verify the application package's authenticity using the digital signature,
- to read, from the metadata, a set of access permissions to be used by the software application at runtime vis-à-vis a resource server (181) having a trust relationship with the external provider,
- to submit, using the cryptographic key, a request (RQ) for the local authorization server to generate access tokens (TKN) corresponding to the set of access permissions, and
- to make the access tokens available to the processing circuitry.

2. The computer system of claim 1, wherein the request is submitted using a data link (160), which is protected by the cryptographic key and which extends between the authorization client and the local authorization server.

3. The computer system of claim 2, wherein the data link is compliant with Transport Layer Security, TLS, or mutual Transport Layer Security, mTLS, or unilateral Transport Layer Security, uTLS.

4. The computer system of any of the preceding claims, wherein the cryptographic key is a private key of an asymmetric key pair.

5. The computer system of any of the preceding claims, wherein the authorization client is configured to read the set of access permissions from metadata contained in a manifest file (194) in the application package.

6. The computer system of any of the preceding claims, wherein the local authorization server is arranged in an application programming interface endpoint, API endpoint (150) managed by the external provider.

7. The computer system of any of the preceding claims, wherein the access tokens corresponding to the set of access permissions are stored locally in the computer system, for use during multiple executions of the software code.

8. The computer system of claim 7, wherein the processing circuitry is configured to observe a finite validity period of the access tokens.

9. The computer system of any of the preceding claims, which is a vehicular computer system, such as an infotainment system in a vehicle (301, 302, 303).

10. The computer system of any of the preceding claims, wherein the resource server (181) is a remote server.

11. A vehicle (301, 302, 303) comprising the computer system (100) of any of claims 1 to 10.

12. A method (200) of executing a software application in a computer system (100), wherein the computer system comprises processing circuitry (120), a local authorization server (110) managed by an external provider (189) and an authorization client (141) trusted by the external provider, the method comprising:
receiving (210), in the computer system, an application package (190) which contains executable software code (191) realizing the software application and associated metadata (192), and which has a digital signature (193) of the external provider;
causing the authorization client to perform the following steps:
- verifying (211.1) the application package's authenticity using the digital signature,
- reading (211.2), from the metadata, a set of access permissions to be used by the software application at runtime vis-à-vis a resource server (181) having a trust relationship with the external provider,
- submitting (211.3) a request (RQ) for the local authorization server to generate access tokens (TKN) corresponding to the set of access permissions, and
- making (211.4) the access tokens available to the processing circuitry;
executing (212) the software code using the processing circuitry, while accessing (212.1) data in the resource server using the access tokens.

13. A computer program product comprising program code for performing, when executed by the processing circuitry (120), the method (200) of claim 12.

14. The method of claim 12, wherein the step of submitting (211.3) a request to generate access tokens is performed in absence of a functioning connection (184) to the global Internet (180).

15. The method of claim 14, wherein the request is submitted (211.3) using a cryptographic key to which the authorization client has exclusive access.
